(19) **Europäisches Patentamt European Patent Office Office européen des brevets**

(11) **EP 4 680 530 B1**

(12) **FASCICULE DE BREVET EUROPEEN**

(45) Date de publication et mention de la délivrance du brevet:
**25.02.2026 Bulletin 2026/09**

(21) Numéro de dépôt: **23837694.1**

(22) Date de dépôt: **22.12.2023**

(51) Classification Internationale des Brevets (IPC):
**B64G 1/24** *(2006.01)* **B64G 1/32** *(2006.01)*
**B64G 7/00** *(2006.01)*

(52) Classification Coopérative des Brevets (CPC):
**B64G 1/32; B64G 7/00**

(86) Numéro de dépôt international:
**PCT/EP2023/087596**

(87) Numéro de publication internationale:
**WO 2024/188504 (19.09.2024 Gazette 2024/38)**

(54) **DISPOSITIF DE CONTRÔLE DE VITESSE ANGULAIRE D'UN ENGIN SPATIAL ET ENGIN SPATIAL CORRESPONDANT**

VORRICHTUNG ZUR STEUERUNG DER WINKELGESCHWINDIGKEIT EINES RAUMFAHRZEUGS UND ZUGEHÖRIGES RAUMFAHRZEUG

DEVICE FOR CONTROLLING THE ANGULAR VELOCITY OF A SPACECRAFT, AND CORRESPONDING SPACECRAFT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **13.03.2023 FR 2302125**

(43) Date de publication de la demande:
**21.01.2026 Bulletin 2026/04**

(73) Titulaires:
• **Airbus Defence and Space SAS**
**31402 Toulouse Cedex 4 (FR)**
• **Centre National d'Etudes Spatiales (CNES)**
**75001 Paris (FR)**

(72) Inventeurs:
• **BRAULT, Baptiste**
**31402 Toulouse cedex 4 (FR)**
• **LAGADEC, Kristen**
**31402 Toulouse cedex 4 (FR)**
• **SENES, Maxime**
**31402 Toulouse cedex 4 (FR)**

(74) Mandataire: **Santarelli**
**6 Impasse Michel Labrousse**
**31100 Toulouse (FR)**

(56) Documents cités:
**EP-B1- 3 201 091       BE-A- 858 877**
**CN-A- 106 406 329    CN-A- 111 439 400**
**US-B1- 9 663 250**

## Description

## Domaine de l'invention

Le domaine de l'invention est celui du contrôle d'attitude d'engins spatiaux, tels que des satellites.

L'invention se rapporte plus particulièrement à un dispositif de contrôle de vitesse angulaire d'un engin spatial hors service.

L'invention a ainsi des applications, notamment, mais non exclusivement, pour tous les engins spatiaux pour lesquels une opération de retrait en fin de vie doit être envisagée.

## Art antérieur et ses inconvénients

Les engins spatiaux hors service contribuent à l'accumulation de débris spatiaux. La présence dans l'espace de tels débris spatiaux est problématique car elle constitue une pollution dans la mesure où les débris en question suivent des trajectoires qui peuvent croiser l'orbite d'engins spatiaux fonctionnels, ce qui crée des risques de collision. En outre, les collisions de débris entre eux augmentent le nombre total de débris, ce qui accentue encore plus le risque de collision pour les engins fonctionnels.

Dans ce cadre, la réglementation prévoit qu'il ne faut pas laisser un satellite hors service en orbite plus de 25 ans. Si un tel satellite vole à une hauteur supérieure à environ 600 km, la traînée atmosphérique ne suffit pas à le faire tomber sur Terre. Ainsi, soit un tel satellite est configuré pour descendre par ses propres moyens soit, s'il tombe en panne avant de pouvoir le faire, il faudra qu'un autre engin spatial le rejoigne pour le faire descendre sur Terre.

Cependant, même dans le cas d'un satellite en orbite suffisamment basse pour que la traînée atmosphérique suffise à le faire tomber sur Terre, il convient de vérifier qu'aucun risque n'est associé à une telle retombée. Par exemple, si le satellite contient trop de pièces susceptibles de survivre à la rentrée atmosphérique (acier, titane, céramiques), cela pourrait représenter un risque au sol si le satellite venait à rentrer passivement (i.e. n'importe où). Il faut alors que le satellite soit capable d'effectuer une rentrée dite contrôlée nécessitant significativement plus d'ergols et des opérations plus délicates.

Aussi, afin de capturer et désorbiter un débris spatial tel qu'un satellite décommisionné, on connaît des engins spatiaux adaptés à réaliser des manœuvres telles que s'amarrer au débris, de sorte à former un composite, comme par exemple des satellites désorbiteurs tels que ceux décrits dans les demandes EP2746163 et EP2671804. On comprend néanmoins que la vitesse de rotation du satellite hors service reste un facteur limitant de réussite de la phase de capture pour de telles missions. Il est en effet fréquent qu'un satellite hors service soit animé d'une vitesse angulaire importante, soit à cause d'une panne fatale ayant également interrompu la mission (panne de propulsion, collision avec un débris), soit à cause de l'accumulation de perturbations externes faibles (pression de radiation solaire) sur de longues durées. En outre, même dans le cas d'une capture réalisée avec succès, la suite immédiate des opérations pour le contrôle du composite est incompatible avec une grande vitesse de rotation, notamment lorsque le satellite hors service est relié au satellite désorbiteur par des liens souples, comme par exemple un harpon ou un filet. On connait également le brevet EP3538441 qui enseigne un projectile comprenant une enceinte externe séparée par un fluide visqueux d'un corps interne aimanté. Le document US9663250B1 divulgue un dispositif de contrôle de vitesse angulaire d'un engin spatial comprenant un système aimanté de freinage.

Il existe d'une manière générale un besoin pour améliorer les techniques de contrôle d'un engin spatial hors service.

## Exposé de l'invention

L'invention concerne un dispositif de contrôle de vitesse angulaire d'un engin spatial hors service permettant de faciliter les opérations de retrait actif de l'engin spatial en tant que débris spatial. Un tel dispositif de contrôle de vitesse angulaire comprend un stator et un rotor mobile selon un axe de rotation par rapport au stator, le stator étant destiné à être entrainé par l'engin spatial à stabiliser, le rotor étant destiné à s'orienter selon le champ magnétique terrestre. Le stator comprend un corps électriquement conducteur et non-ferromagnétique tandis que le rotor comprend un système aimanté configuré pour induire, dans le stator, des courants de Foucault de freinage d'un mouvement relatif du rotor par rapport au stator et pour créer un moment magnétique dans le champ magnétique terrestre. Le rotor comprend en outre un (ou plusieurs) aimant de sustentation destiné à coopérer avec un champ magnétique généré par une source extérieure au dispositif pour induire une sustentation magnétique du rotor par rapport au stator lorsque le dispositif de contrôle de vitesse angulaire est en gravité terrestre. Le dispositif de contrôle de vitesse angulaire est constitué d'un ou plusieurs matériaux non-ferromagnétiques au moins dans une zone d'influence du champ magnétique généré par ledit aimant de sustentation. Ainsi, l'invention propose une solution nouvelle et inventive pour contrôler l'attitude d'un engin spatial décommissionné (i.e. à bord duquel aucune source d'énergie n'est disponible). Ce but est atteint par un dispositif d'amortissement magnétique passif fixé à la structure de la plateforme, où un rotor équipé d'aimants est libre de tourner à l'intérieur d'un stator conducteur non-ferromagnétique (i.e. de sorte à ne pas se magnétiser dans le temps). Les aimants du système aimanté sont placés en vis-à-vis du corps par exemple en aluminium. Même si l'engin spatial pivote, le rotor reste aligné avec le champ géomagnétique : la vitesse angulaire différentielle entre le rotor et la plateforme créé des courants de Foucault dans le stator et dissipe ainsi l'énergie cinétique de rotation, tendant à arrêter la rotation de l'engin spatial par rapport au champ magnétique terrestre. Par ailleurs, l'implémentation d'un (ou plusieurs) aimant de sustentation permet le test du dispositif de contrôle de vitesse angulaire au sol, en simulant l'apesanteur via la coopération de l'aimant (ou des aimants) en question avec le champ magnétique généré par une source extérieure. A contrario, le dispositif de contrôle de vitesse angulaire ne comprend pas de matériau(x) ferromagnétique(s) au moins dans la zone d'influence du champ magnétique généré par l'aimant (ou des aimants) de sustentation. Ainsi, la présence de l'aimant (ou des aimants) 11 de sustentation au sein du dispositif de contrôle de vitesse angulaire ne perturbe pas la rotation du rotor par rapport au stator une fois le dispositif placé en orbite. Dans certains modes de réalisation, le système aimanté comprend une pluralité d'aimants de freinage disposés selon un plan perpendiculaire à l'axe de rotation du rotor.

Dans certains modes de réalisation, les moments magnétiques des aimants de freinage se somment selon une composante non nulle dans le plan perpendiculaire à l'axe de rotation du rotor de façon à ce que les aimants de freinage permettent également une orientation du rotor selon le champ magnétique terrestre.

Une telle configuration permet de combiner la fonction boussole et la fonction induction des courants.

Dans certains modes de réalisation, les moments magnétiques de plusieurs des aimants de freinage sont sensiblement perpendiculaires au plan perpendiculaire à l'axe de rotation du rotor, de façon à ce que leur champ magnétique traverse le plan perpendiculaire à l'axe de rotation du rotor pour induire des courants de Foucault dans au moins deux zones du corps du stator situées en regard de part et d'autre du plan perpendiculaire à l'axe de rotation du rotor. Le stator présente par exemple un profil en U venant autour et de part et d'autre de la bague.

Ainsi, la quantité de courants induits par un aimant du rotor est doublée par rapport à une implémentation dans laquelle le moment magnétique de l'aimant est sensiblement parallèle au plan de rotation du rotor (i.e. perpendiculaire à l'axe de rotation du rotor).

Dans certains modes de réalisation, les moments magnétiques de plusieurs des aimants de freinage forment un angle oblique par rapport au dit plan perpendiculaire à l'axe de rotation du rotor.

Une telle configuration permet de combiner la fonction boussole et le doublement des courants induits.

Dans certains modes de réalisation, l'aimant (ou les aimants) de sustentation comprend un pôle sud et un pôle nord disposés selon l'axe de rotation.

Ainsi, la force engendrée en présence d'un champ magnétique généré par une source extérieure au dispositif de contrôle de vitesse angulaire est maximisée dans la direction de l'axe de rotation. Dans certains modes de réalisation, le rotor est guidé dans au moins deux logements du stator centrés selon l'axe de rotation, selon un contact mécanique du type sphère contre plan.

Dans certains modes de réalisation, les deux logements comprennent chacun un palier lisse fermé, à l'opposé du rotor, par une cloison plane de fin de course disposée transversalement au palier. Deux têtes sphériques intégrées dans le rotor et centrées selon l'axe de rotation sont configurées pour coopérer avec les deux logements.

Ainsi, le rotor est ajusté au stator avec une grande précision (e.g. avec un jeu inférieur à 1 mm) tout en minimisant le frottement pendant la rotation du rotor (e.g. le frottement est de préférence inférieur à une fraction du couple magnétique entraînant le rotor).

Dans certains modes de réalisation, l'aimant (ou les aimants) de sustentation est fixé à demeure au rotor.

Dans certains modes de réalisation, l'aimant (ou les aimants) de sustentation est fixé de manière temporaire au rotor.

Ainsi, l'aimant (ou les aimants) de sustentation peut être fixé au rotor uniquement pendant la phase de test au sol. Le dispositif de contrôle de vitesse angulaire est ainsi plus léger pour la mise en orbite.

Dans certains modes de réalisation, l'aimant (ou les aimants) de sustentation se présente sous une forme annulaire.

Ainsi, la force exercée par l'aimant (ou les aimants) de sustentation en présence d'un champ magnétique généré par une source extérieure au dispositif de contrôle de vitesse angulaire est colinéaire à l'axe de rotation. Ceci permet de minimiser le gradient horizontal pour ne pas générer de force latérale (i.e. perpendiculairement à l'axe de rotation pendant le test).

L'invention concerne également un système comprenant :

- un dispositif de contrôle de vitesse angulaire tel que décrit ci-dessus (selon l'un quelconque des modes de réalisation précités) ; et
- un dispositif de test du dispositif de contrôle de vitesse angulaire. Le dispositif de test comprend au moins une source de champ magnétique destiné à coopérer avec l'aimant (ou les aimants) de sustentation pour induire une sustentation magnétique du rotor par rapport au stator en gravité terrestre.

Dans certains modes de réalisation, la source de champ magnétique comprend un aimant permanent ou un électro-aimant.

L'invention concerne également un procédé de test au sol d'un dispositif de contrôle de vitesse angulaire tel que décrit ci-dessus (selon l'un quelconque des modes de réalisation précités), par mise en œuvre d'un dispositif de test comprenant une (ou plusieurs) source de champ magnétique destiné à coopérer avec l'aimant (ou les aimants) de sustentation pour induire une sustentation magnétique du rotor par rapport au stator en gravité terrestre. Un tel procédé comprend :

- un ajustement relatif du dispositif de contrôle et du dispositif de test, comprenant un réglage fin du champ magnétique engendré par la (ou les) source de champ magnétique de façon à ce que le champ magnétique coopère avec l'aimant (ou les aimants) de sustentation du dispositif de contrôle de vitesse angulaire pour induire la sustentation magnétique du rotor par rapport au stator ;
- un test fonctionnel du dispositif de contrôle ajusté.

Dans certains modes de réalisation, la source de champ magnétique comprend un électro-aimant. Le procédé comprend au moins une mise en fonctionnement de l'électro-aimant pour engendrer le champ magnétique.

L'invention concerne également un engin spatial comprenant un ou plusieurs dispositifs de contrôle de vitesse angulaire tel que décrit précédemment (selon l'un quelconque des modes de réalisation précités).

Dans certains modes de réalisation, l'engin spatial comprend en outre des moyens de contrôle d'attitude selon trois axes adaptés à stabiliser l'attitude de l'engin spatial en activité. Le ou les dispositifs de contrôle de vitesse angulaire de l'engin lorsqu'il sera hors service agissent simultanément aux moyens de contrôle d'attitude de l'engin spatial en activité et exercent une action négligeable par rapport à ces moyens de contrôle d'attitude de l'engin spatial en activité. Dans certains modes de réalisation, chaque dispositif de contrôle de vitesse angulaire est agencé de façon à ce que l'axe de rotation du rotor forme un angle inférieur ou égal à 45° avec un axe de plus grande inertie de l'engin spatial, tel que l'engin spatial hors service tende vers un mouvement de rotation autour de cet axe de plus grande inertie.

Un premier avantage de l'invention est de permettre la réduction de la vitesse angulaire du satellite à capturer, préalablement à sa capture qui est ainsi facilitée. La présente invention permet ainsi d'éviter qu'un satellite hors service soit animé d'une vitesse angulaire importante, soit à cause d'une panne fatale ayant causé l'interruption de la mission telle qu'une panne de propulsion, ou une collision avec un débris, soit à cause de l'accumulation de perturbations externes faibles causées par exemple par une pression de radiation solaire, sur de longues durées. Un deuxième avantage de l'invention est de permettre le test du dispositif de contrôle de vitesse angulaire au sol, tout en simulant l'apesanteur via la coopération de l'aimant (ou des aimants) de sustentation avec le champ magnétique généré par une source extérieure.

## Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

[Fig.1] représente un dispositif de contrôle de vitesse angulaire d'un engin spatial selon un exemple de réalisation de l'invention ;
[Fig.2] représente un dispositif de contrôle de vitesse angulaire d'un engin spatial selon un autre exemple de réalisation de l'invention ;
[Fig.3a] représente une configuration des aimants de freinage d'un dispositif de contrôle de vitesse angulaire d'un engin spatial selon un exemple de réalisation de l'invention ;
[Fig.3b] représente une configuration des aimants de freinage d'un dispositif de contrôle de vitesse angulaire d'un engin spatial selon un autre exemple de réalisation de l'invention ;
[Fig.4] représente une vue détaillée d'une partie axiale d'un dispositif de contrôle de vitesse angulaire d'un engin spatial ainsi qu'un dispositif de test du dispositif de contrôle selon un exemple de réalisation de l'invention ;
[Fig.5] représente les étapes d'un procédé de test au sol d'un dispositif de contrôle de vitesse angulaire d'un engin spatial selon un exemple de réalisation de l'invention ;
[Fig.6] représente un modèle simplifié d'un dispositif de contrôle de vitesse angulaire d'un engin spatial permettant de prédire la constante de temps de dérotation de l'engin spatial ;
[Fig.7] représente un engin spatial équipé de deux dispositifs de contrôle de vitesse angulaire selon un exemple de réalisation de l'invention.

## Description détaillée de modes de réalisation de l'invention

Le principe général de l'invention repose sur un dispositif de contrôle de vitesse angulaire d'un engin spatial permettant notamment de faciliter les opérations de retrait de l'engin spatial en tant que débris spatial. Un tel dispositif comprend un stator et un rotor mobile selon un axe de rotation par rapport au stator, le stator étant destiné à être entrainé par l'engin spatial à stabiliser, le rotor étant destiné à s'orienter selon le champ magnétique terrestre. Le stator comprend un corps électriquement conducteur et non-ferromagnétique tandis que le rotor comprend un système aimanté configuré pour induire, dans le stator, des courants de Foucault de freinage d'un mouvement relatif du rotor par rapport au stator et pour créer un moment magnétique dans le champ magnétique terrestre (fonction boussole). Le rotor se comporte comme une aiguille de boussole grâce à un biais de moment magnétique apporté par un aménagement asymétrique des polarités des aimants de freinage ou grâce à des aimants d'orientation dédiés.

Ainsi, même en l'absence de source d'énergie à bord de l'engin spatial, le rotor reste aligné avec le champ magnétique terrestre (fonction boussole). La vitesse angulaire différentielle entre le rotor et l'engin spatial crée des courants de Foucault dans le stator et dissipe ainsi l'énergie cinétique de rotation, tendant à arrêter le mouvement de rotation de l'engin spatial par rapport au champ magnétique terrestre. La vitesse de rotation de l'engin spatial est ainsi contrôlée.

Par ailleurs, le rotor comprend un (ou plusieurs) aimant de sustentation destiné à coopérer avec un champ magnétique généré par une source extérieure au dispositif de contrôle de vitesse angulaire pour induire une sustentation magnétique du rotor par rapport au stator lorsque le dispositif de contrôle de vitesse angulaire est en gravité terrestre. Par ailleurs, le stator est constitué d'un matériau non-ferromagnétique dans une zone d'influence du champ magnétique généré par l'aimant (ou les aimants). Ainsi, le dispositif de contrôle de vitesse angulaire peut être aisément testé au sol, la présence de l'aimant (ou des aimants) permettant de simuler l'apesanteur.

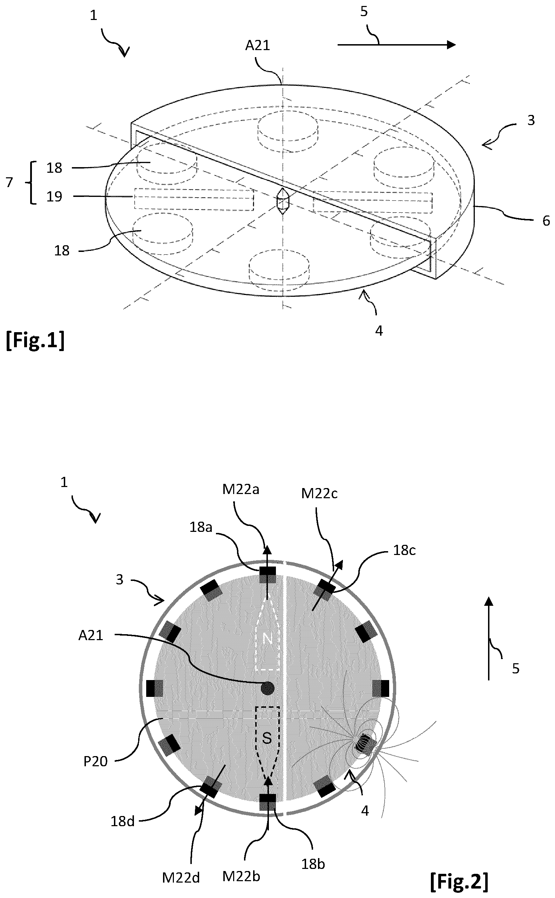

On présente désormais, en relation avec la **[Fig.1]** un dispositif 1 de contrôle de vitesse angulaire d'un engin 2 spatial selon un exemple de réalisation de l'invention.

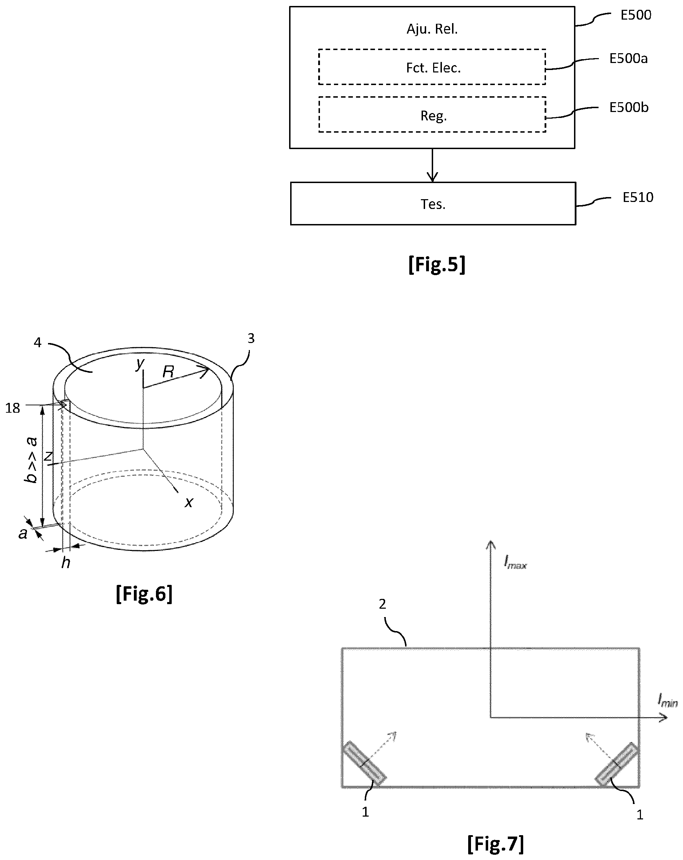

Comme décrit plus avant ci-dessous en relation avec la [Fig.7], le dispositif 1 selon l'invention permet notamment de contrôler la vitesse angulaire de l'engin 2 spatial lorsque ce dernier est hors service. Ceci permet par exemple de faciliter les opérations de retrait actif de l'engin 2 spatial en tant que débris spatial.

De retour à la [Fig.1], le dispositif 1 comprend un stator 3 et un rotor 4 mobile selon un axe A21 de rotation du rotor 4 par rapport au stator 3. Le stator est par exemple solidaire du bâti du satellite. Selon l'application au contrôle de la vitesse angulaire de l'engin 2 spatial, le stator 3 est destiné à être entrainé par l'engin 2 spatial à stabiliser. Le rotor 4 est quant à lui destiné à s'orienter selon le champ 5 magnétique terrestre.

Par ailleurs, le stator 3 comprend un corps 6 électriquement conducteur, par exemple en aluminium, tandis que le rotor 4 comprend un système aimanté 7 configuré pour induire, dans le stator 3, des courants de Foucault de freinage d'un mouvement relatif du rotor 4 par rapport au stator 3.

On obtient ainsi un dispositif d'amortissement magnétique passif destiné à être fixé à la structure de l'engin 2 spatial, où le rotor 4 équipé du système aimanté 7 est libre de tourner à l'intérieur d'un stator 3.

Le corps 6 du stator 3 est électriquement conducteur et non-ferromagnétique de sorte à ne pas se magnétiser dans le temps. Le corps 6 est par exemple en aluminium ou en cuivre.

Par ailleurs, selon l'exemple de réalisation de la [Fig.1], le système aimanté 7 comprend, d'une part, des aimants 18 de freinage et, d'autre part, des aimants 19 d'orientation. Les aimants 18 de freinage sont configurés pour induire, dans le stator 3, les courants de Foucault de freinage du mouvement relatif du rotor 4 par rapport au stator 3. Les aimants 19 d'orientation sont configurés pour créer un moment magnétique dans le champ 5 magnétique terrestre. Ceci permet de maintenir l'orientation du rotor 4 par rapport au champ 5 magnétique terrestre (fonction boussole).

On présente désormais, en relation avec la **[Fig.2]** un dispositif 1 de contrôle de vitesse angulaire selon un autre exemple de réalisation de l'invention.

Selon l'exemple de réalisation de la [Fig.2], le système aimanté 7 comprend une pluralité d'aimants 18a, 18b, 18c, 18d de freinage disposés selon un plan P20 perpendiculaire à l'axe A21 de rotation du rotor 4 par rapport au stator 3.

Plus particulièrement, les moments magnétiques M22a et M22b des aimants 18a et 18b de freinage se somment selon une composante non nulle dans le plan P20 de façon à ce que les aimants 18a et 18b de freinage permettent également une orientation du rotor 4 selon le champ 5 magnétique terrestre.

Ainsi, dans cet exemple de réalisation, les aimants 18 de freinage remplissent la fonction des aimants 19 d'orientation (fonction boussole). Les aimants 18 de freinage et les aimants 19 d'orientation sont ici les mêmes aimants.

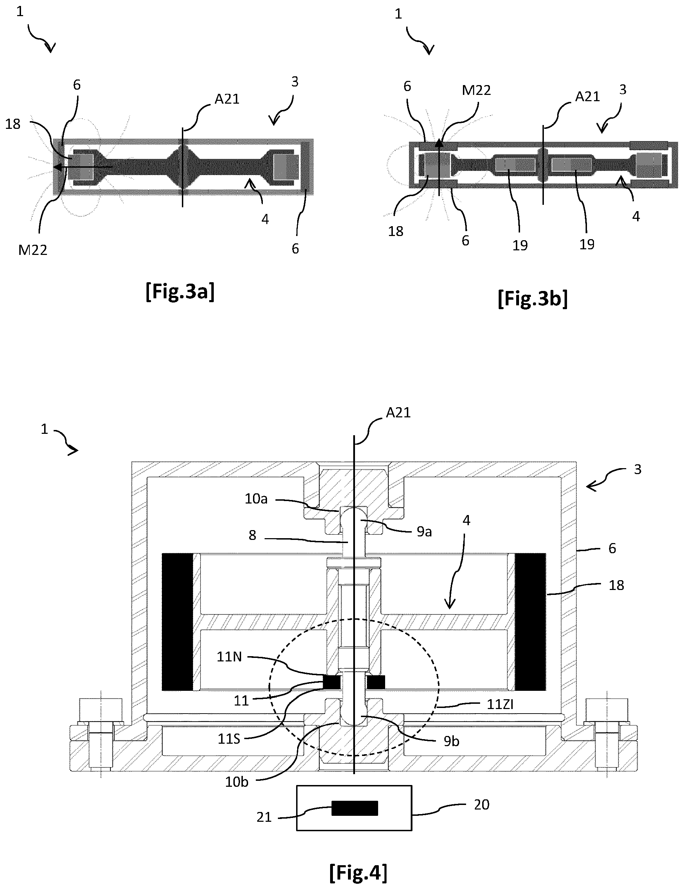

On présente désormais, en relation avec la **[Fig.3a]** une configuration des aimants 18 de freinage selon un exemple de réalisation de l'invention.

Plus particulièrement, les moments magnétiques M22 de plusieurs aimants 18 de freinage sont ici sensiblement parallèles au plan P20 perpendiculaire à l'axe A21 de rotation du rotor 4.

Dans une telle configuration radiale, le rayon de la trajectoire des courants de Foucault induits est maximisé dans le corps 6. La dissipation d'énergie est ainsi maximisée également.

Par ailleurs, les mêmes aimants 18 de freinage peuvent être utilisés pour assurer également la fonction d'orientation du rotor 4 par rapport au stator 3 comme décrit ci-dessus en relation avec la [Fig.2].

Selon une telle configuration des aimants 18 de freinage, il est également plus facile de contrôler la taille de l'entrefer entre les aimants 18 et le corps 6 du stator 3 (e.g. pour adresser la problématique des vibrations de lancement, du jeu libre dans le pivot du rotor 4) ou de loger des aimants 18 avec un rapport d'aspect plus grand (e.g. une hauteur plus grande des aimants 18 permet un entrefer plus important).

Par ailleurs, le boîtier du stator 3 peut être en une matière quelconque, par exemple en plastique, avec simplement une piste 6 en matériau non-ferromagnétique (e.g. en aluminium ou en cuivre) formant un logement ou disposé dans un logement réalisé dans le stator 3, en regard des aimants 18. Ce logement s'étend par exemple autour du stator avec un profil en U. Le stator comprend par exemple une bague cylindrique venant dans ce logement.

On présente désormais, en relation avec la **[Fig.3b]** une configuration des aimants 18 de freinage selon un autre exemple de réalisation de l'invention.

Plus particulièrement, les moments magnétiques M22 de plusieurs aimants 18 de freinage sont ici sensiblement perpendiculaires au plan P20. En d'autres termes, les moments magnétiques M22 des aimants 18 de freinage en question sont ici sensiblement parallèles à l'axe A21 de rotation du rotor 4.

Ainsi, le champ magnétique des aimants 18 de freinage traverse le plan P20 pour induire des courants de Foucault dans au moins deux zones du corps 6 du stator 3 situées en regard de part et d'autre du plan P20 en question. Les courants de Foucault ainsi induits sont potentiellement doublés par rapport à une configuration radiale des aimants 18 de freinage telle que décrite ci-dessus en relation avec la [Fig.3a]. Cependant, dans la configuration normale des aimants 18 de freinage de la [Fig.3b], les aimants 18 de freinage ne peuvent remplir en même temps la fonction d'orientation du rotor 4 par rapport au stator 3. Des aimants additionnels remplissant la fonction d'orientation du rotor 4 par rapport au stator 3 sont ici nécessaires, par exemple des aimants 19 d'orientation comme décrit ci-dessus en relation avec la [Fig.1].

Dans d'autres implémentations, les aimants additionnels remplissant la fonction d'orientation du rotor 4 par rapport au stator 3 sont d'autres aimants 18 de freinage en configuration radiale comme décrit ci-dessus en relation avec la [Fig.3a]. On obtient ainsi une configuration mixte avec certains aimants 18 de freinage en configuration normale et certains aimants 18 de freinage en configuration radiale.

Dans d'autres implémentations, les moments magnétiques M22 de plusieurs aimants 18 de freinage forment un angle oblique par rapport au plan P20 perpendiculaire à l'axe A21 de rotation du rotor 4. Par exemple, les moments magnétiques M22 en question forment un angle avec l'axe A21 de rotation du rotor 4 compris entre 10 degrés et 80 degrés, de préférence entre 30 degrés et 60 degrés. Dans une telle configuration, des courants de Foucault sont également induits de part et d'autre du plan P20 en question. Par ailleurs, une composante non nulle du moment magnétique total des aimants 18 de freinage peut ainsi être obtenue dans le plan P20 en question. De la sorte, les aimants 18 de freinage assurent également la fonction d'orientation du rotor 4 par rapport au stator 3 (fonction boussole).

On présente désormais, en relation avec la **[Fig.4],** la partie axiale du dispositif 1 de contrôle de vitesse angulaire ainsi qu'un dispositif 20 de test du dispositif 1 de contrôle de vitesse angulaire selon un exemple de réalisation de l'invention.

En pratique, le rotor 4 doit être ajusté au stator 3 avec suffisamment de précision pour que les aimants 18 de freinage se déplacent typiquement à moins de 1 mm du corps 6 du stator 3 sans jamais se toucher. Par ailleurs, les moyens d'ajustement du rotor 4 au stator 3 doivent induire le moins de frottements possible, de sorte que le rotor 4 soit toujours libre de tourner. Le frottement doit être de préférence inférieur à une fraction du couple magnétique entraînant le rotor 4. Dans ce but, le rotor 4 est ici guidé dans deux logements 10a, 10b correspondant du stator 3 selon un contact mécanique du type sphère contre plan. Pour ce faire, les deux logements 10a, 10b comprennent par exemple chacun un palier lisse fermé, à l'opposé du rotor 4, par une cloison plane de fin de course disposée transversalement au palier. Deux têtes sphériques 9a, 9b intégrées dans le rotor 4 et centrées selon l'axe de rotation A21 sont configurées pour coopérer avec les deux logements 10a, 10b. Selon une telle technologie de pivoterie, le couple résistif obtenu lors de la rotation du rotor 4 relativement au stator 3 est très faible, notamment en condition orbitale (i.e. en l'absence de pesanteur ressentie).

Cependant, afin d'effectuer les tests au sol, des moyens supplémentaires sont implémentés afin de recréer les conditions opérationnelles du dispositif 1 de contrôle de vitesse angulaire en orbite. Plus particulièrement, le dispositif 1 de contrôle de vitesse angulaire comprend un (ou plusieurs) aimant 11 de sustentation. L'aimant (ou les aimants) 11 de sustentation est destiné à coopérer avec un champ magnétique généré par une source extérieure au dispositif 1 de contrôle de vitesse angulaire pour induire une sustentation magnétique du rotor 4 par rapport au stator 3 lorsque le dispositif 1 de contrôle de vitesse angulaire est en gravité terrestre.

Plus particulièrement, la source extérieure au dispositif 1 de contrôle de vitesse angulaire est ici fournie par le dispositif 20 de test. Un tel dispositif 20 de test comprend en effet une (ou plusieurs) source 21 de champ magnétique destinée à coopérer avec l'aimant (ou les aimants) 11 de sustentation pour induire une sustentation magnétique du rotor 4 par rapport au stator 3 en gravité terrestre. Par exemple, la (ou les) source 21 de champ magnétique comprend un aimant permanent ou un électro-aimant.

Cependant, afin que la présence de l'aimant (ou des aimants) 11 de sustentation au sein du dispositif 1 de contrôle de vitesse angulaire ne perturbe pas en orbite la technologie de pivoterie décrite ci-dessus, le dispositif 1 de contrôle de vitesse angulaire est constitué d'un ou plusieurs matériaux non-ferromagnétiques au moins dans une zone 11ZI d'influence du champ magnétique généré par l'aimant (ou les aimants) de sustentation. Ainsi, l'aimant (ou les aimants) 11 de sustentation n'exerce pas de force supplémentaire sur le rotor 4 lorsque le dispositif 1 de contrôle de vitesse angulaire est isolé du dispositif 20 de test, e.g. lorsque le dispositif 1 de contrôle de vitesse angulaire est en orbite.

Selon le présent exemple de réalisation, l'aimant (ou les aimants) 11 de sustentation comprend un pôle sud 11S et un pôle nord 11N disposés selon l'axe A21 de rotation (e.g. le moment magnétique de l'aimant (ou des aimants) 11 de sustentation est parallèle à l'axe A21 de rotation). De la sorte, la force engendrée en présence d'un champ magnétique généré par une source extérieure au dispositif 1 de contrôle de vitesse angulaire est maximisée dans la direction de l'axe A21 de rotation. Cependant, d'autres dispositions peuvent être envisagées.

Selon certaines implémentations, l'aimant (ou les aimants) 11 de sustentation est fixé à demeure au rotor 4.

Cependant, selon d'autres implémentations, l'aimant (ou les aimants) 11 de sustentation est fixé de manière temporaire au rotor 4. Ainsi, l'aimant (ou les aimants) 11 de sustentation peut être retiré du dispositif 1 de contrôle de vitesse angulaire après la phase de test au sol. Le dispositif 1 de contrôle de vitesse angulaire est ainsi plus léger pour la mise en orbite.

La rémanence de l'aimant (ou des aimants) 11 de sustentation est choisie en fonction de son volume (e.g. la rémanence de l'aimant (ou des aimants) 11 de sustentation du dispositif 1 de contrôle de vitesse angulaire est prise égale à 1 Tesla). Le volume est déterminé notamment en fonction du poids du rotor 4 et en fonction de la source 21 de champ magnétique. Il est par exemple préférable de minimiser le gradient horizontal pour ne pas générer de force latérale (i.e. perpendiculairement à l'axe A21 de rotation pendant le test).

Ainsi, selon certaines implémentations, l'aimant (ou les aimants) 11 de sustentation se présente sous une forme annulaire. Par exemple, l'aimant (ou les aimants) 11 de sustentation présente une forme annulaire de révolution autour de l'axe A21 de rotation. De la sorte, la force exercée par l'aimant (ou les aimants) 11 de sustentation en présence du champ magnétique de la source 21 est colinéaire à l'axe A21 de rotation. Cela permet, par exemple, d'éviter de biaiser le test au sol du dispositif 1 de contrôle de vitesse angulaire en ajoutant une force latérale sur le rotor par rapport à l'axe A21 de rotation.

De même, plus la source 21 de champ magnétique est petite, plus le gradient horizontal sera important. A contrario, plus la source 21 de champ magnétique est grande, plus le champ est uniforme. En particulier, un électro-aimant du type bobine permet de créer de manière simple un champ magnétique relativement uniforme.

Par exemple, le choix des caractéristiques du (ou des) aimant 11 de sustentation du dispositif 1 de contrôle de vitesse angulaire ainsi que des caractéristiques de la source 21 de champ magnétique résulte d'un processus itératif et empirique. Par exemple, plus la source 21 de champ magnétique est physiquement étendue et plus son réglage doit être fin.

On présente désormais, en relation avec la **[Fig.5],** les étapes d'un procédé de test au sol du dispositif 1 de contrôle de vitesse angulaire selon un exemple de réalisation de l'invention.

Plus particulièrement, un tel procédé de test met en œuvre un dispositif 20 de test tel que décrit précédemment (selon l'un quelconque des modes de réalisation décrits ci-dessus).

Ainsi, lors d'une étape E500 d'ajustement, le dispositif 1 de contrôle de vitesse angulaire est ajusté relativement au dispositif de test. L'étape E500 d'ajustement comprend une étape E500b de réglage fin du champ magnétique engendré par la source 21 de champ magnétique de façon à ce que le champ magnétique coopère avec l'aimant (ou les aimants) 11 de sustentation du dispositif 1 de contrôle de vitesse angulaire pour induire la sustentation magnétique du rotor 4 par rapport au stator 3.

Un tel réglage fin comprend par exemple le positionnement relatif des dispositifs afin que le champ magnétique généré par la source 21 du dispositif 20 de test coopère avec l'aimant (ou les aimants) 11 de sustentation du dispositif 1 de contrôle de vitesse angulaire pour induire la sustentation magnétique du rotor 4 par rapport au stator 3. C'est par exemple le cas lorsque la source 21 comprend un aimant permanent. Dans un tel cas, le positionnement relatif des dispositifs permet d'optimiser la valeur du champ magnétique généré par la source 21 du dispositif 20 de test tel que ressenti par l'aimant (ou les aimants) 11 de sustentation du dispositif 1 de contrôle de vitesse angulaire. Alternativement, lorsque la source 21 de champ magnétique comprend un électro-aimant, l'étape E500 comprend par exemple une étape E500a de mise en fonctionnement de l'électro-aimant pour engendrer le champ magnétique, puis, le cas échéant, la mise en œuvre de l'étape E500b de réglage fin du champ magnétique engendré par la source 21 de champ magnétique (e.g. via le réglage du courant injecté dans l'électro-aimant) de sorte à obtenir l'effet recherché de sustentation magnétique du rotor 4 par rapport au stator 3.

Lors d'une étape E510 de test, le test fonctionnel du dispositif 1 de contrôle de vitesse angulaire. De par la sustentation magnétique du rotor 4 par rapport au stator 3, un tel test fonctionnel, bien qu'effectué au sol, permet de tester la fonctionnalité du dispositif 1 de contrôle de vitesse angulaire dans des conditions simulant l'apesanteur.

On présente désormais, en relation avec la **[Fig.6]** un modèle simplifié du dispositif 1 de contrôle de vitesse angulaire selon un exemple de réalisation de l'invention.

Plus particulièrement, un tel modèle permet d'estimer la constante de temps de dérotation d'un engin spatial auquel serait fixé un dispositif de contrôle de vitesse angulaire selon la présente technique.

Comme hypothèse simplificatrice, on considère ici un aimant 18 de freinage avec une longueur $b$ suffisamment grande par rapport à sa largeur $a$ qu'il peut être considéré comme infini. L'aimant 18 de freinage est logé radialement à la périphérie d'un rotor 4 cylindrique de longueur infinie le long de son axe (axe y) et de rayon $R$. L'aimant 18 de freinage se déplace à une distance supposée infinitésimale $\varepsilon$ (= entrefer) d'un boîtier métallique cylindrique, également de longueur infinie le long de l'axe du cylindre, modélisant le stator 3.

L'aimant 18 est magnétisé radialement et sa hauteur $h$ le long de la direction radiale est suffisamment grande par rapport à sa largeur pour qu'il puisse également être considéré comme infini. En raison de la hauteur infinie de l'aimant 18, le champ magnétique $B$ généré par l'aimant 18 à sa surface se rapproche de la valeur asymptotique, caractérisée par la rémanence, $Br$, du matériau :

[Math.1]

$$B = \frac{B_r}{2}$$

Selon un tel modèle à une dimension, le champ électrique et les courants ont des composantes non nulles uniquement le long de l'axe y. Cela simplifie l'analyse, car la loi de Maxwell-Faraday :

[Math.2]

$$\nabla \times E = -\frac{\partial B}{\partial t}$$

se réduit à une seule équation différentielle :

[Math.3]

$$\frac{\partial E_y}{\partial x} = -\frac{\partial B_z}{\partial t} = -\frac{\partial B_z}{\partial x} R\omega$$

avec R le rayon du cylindre et $\omega$ la vitesse angulaire de rotation du cylindre autour de son axe. Comme le champ électrique et le champ magnétique sont nuls à l'infini, l'intégration selon $x$ de l'équation [Math.3] est simple. Il en résulte que le champ électrique axial est proportionnel au champ magnétique radial selon la relation suivante :

[Math.4]

$$E_y = -B \cdot R\omega = -\frac{B_r}{2} \cdot R\omega$$

La puissance électrique $P$ dissipée par unité de volume $V$ du boîtier du stator 3 (en considérant un matériau de résistivité $P$) pour un seul aimant 18 est alors :

[Math.5]

$$\frac{dP}{dV} = \frac{1}{\rho} \cdot E_y^2 = \frac{B_r^2}{4\rho} \cdot R^2 \omega^2$$

Afin d'obtenir la puissance électrique $P$ totale dissipée, la relation précédente doit être intégrée sur le volume où se produit le phénomène, supposé être $e \times a \times b$ (où $e$ est l'épaisseur du boîtier du stator 3, $a$ est la largeur de l'aimant dans la direction tangentielle, $b$ est la longueur réelle et finie de l'aimant le long de $y$). On obtient ainsi :

[Math.6]

$$P = \frac{B_r^2}{4\rho} \cdot eab \cdot R^2 \omega^2$$

Lorsque l'on considère un rotor 4 avec $n$ aimants 18 de freinage, la puissance totale dissipée est supposée proportionnelle à $n$ (en supposant que les aimants 18 n'interagissent pas entre eux). Lorsque le stator 3 est entraîné par l'engin 2 spatial à stabiliser et que le rotor reste orienté selon le champ magnétique terrestre, la puissance électrique $P$ totale dissipée correspond en fait à une perte d'énergie cinétique du satellite $\dot{E} = I\omega\dot{\omega}$, avec $I$ l'inertie de l'engin 2 spatial à stabiliser autour de l'axe du cylindre. On obtient ainsi :

[Math.7]

$$nP = I\omega\dot{\omega} = \frac{B_r^2}{4\rho} \cdot neab \cdot R^2 \omega^2$$

A partir de la relation précédente on peut déduire une constante de temps $\tau$ pour la décroissance exponentielle de la vitesse angulaire :

[Math.8]

$$\tau = \frac{\omega}{\dot{\omega}} = \frac{4\rho I}{B_r^2 R^2 \cdot neab}$$

A titre d'exemple, une constante de temps $\tau$ de 28 jours est obtenue pour les valeurs suivantes des paramètres de l'équation [Math.8] :

- Nombre d'aimants 18, $n$ : 8 ;
- largeur d'un aimant 18 dans la direction tangentielle, $a$ : 3 mm ;
- longueur réelle de l'aimant le long de $y$, $b$ : 15 mm ;
- épaisseur du boîtier du stator 3, $e$ : 1 mm ;
- résistivité du matériau, P : $2{,}7 \times 10^{-8}$ Ω.m ;
- rayon du rotor 4, $R$ : 2,5 cm ;
- rémanence d'un aimant, $Br$ : 1 T ; et
- inertie de l'engin 2 spatial à stabiliser autour de l'axe du cylindre, $I$ : 5000 kg.m$^2$.

On présente désormais, en relation avec la **[Fig.7]** un engin 2 spatial équipé de deux dispositifs 1 de contrôle de vitesse angulaire selon un exemple de réalisation de l'invention.

Plus particulièrement, le stator 3 de chaque dispositif 1 est fixé à l'engin 2 spatial de sorte à être entraîné par l'engin 2 spatial. Le rotor 4 de chaque dispositif 1 s'oriente selon le champ 5 magnétique terrestre.

Selon le présent exemple de réalisation, deux dispositifs 1 de contrôle de vitesse angulaire sont implémentés dans l'engin spatial 2 à stabiliser lorsqu'il est hors service. En effet, un dispositif 1 de contrôle de vitesse angulaire selon la présente technique ne peut théoriquement pas amortir des vitesses angulaires normales à son axe. Cependant, un engin 2 spatial hors service va naturellement tendre à suivre un mouvement de rotation autour de son axe principal d'inertie maximale. Ainsi, si un tel dispositif 1 de contrôle de vitesse angulaire n'est pas implanté de sorte à avoir son axe A21 de rotation strictement perpendiculaire à l'axe principal d'inertie maximale, on peut s'attendre à observer des taux de rotation angulaires résiduels.

Ainsi, si un seul dispositif 1 de contrôle de vitesse angulaire est suffisant en théorie pour amortir la rotation de l'engin 2 spatial autour des 3 axes d'inertie, il peut être intéressant en pratique d'implémenter deux ou trois dispositifs 1 de contrôle de vitesse angulaire à des fins de redondance.

Cependant, dans d'autres exemples de réalisation, l'engin 2 spatial est équipé d'un seul dispositif 1 de contrôle de vitesse angulaire.

Dans certains exemples de réalisation, l'axe A21 de rotation du rotor 4 du (ou des) dispositif 1 de contrôle de vitesse angulaire forme un angle inférieur ou égal à 45° avec l'axe de plus grande inertie de l'engin 2 spatial (axe dénoté « $I_{max}$ » dans la [Fig.7]), tel que l'engin 2 spatial hors service tende vers un mouvement de rotation autour de cet axe de plus grande inertie. En effet, la rotation de l'engin 2 spatial va tendre naturellement vers une rotation autour de son axe de plus grande inertie (phénomène dit de « flat spin » selon la terminologie anglo-saxonne). Ainsi, une disposition selon laquelle le ou les axes A21 de rotation du ou des rotors 4 du ou des dispositifs 1 de contrôle de vitesse angulaire forment un angle inférieur ou égal à 45° avec l'axe de plus grande inertie de l'engin 2 spatial permet de garantir une dissipation de l'énergie cinétique de rotation de l'engin 2 spatial autour de son axe de plus grande inertie ayant pour conséquence de freiner la rotation de l'engin spatial.

L'engin 2 spatial en activité comprend en outre des moyens de contrôle d'attitude selon trois axes adaptés à stabiliser l'attitude de l'engin spatial en activité. Le ou les dispositifs 1 de contrôle de vitesse angulaire agissent simultanément aux moyens de contrôle d'attitude de l'engin spatial en activité mais exercent une action négligeable par rapport à ces moyens de contrôle d'attitude de l'engin spatial en activité.

De la sorte, le ou les dispositifs 1 de contrôle de vitesse angulaire ont un effet négligeable sur le contrôle d'attitude de l'engin 2 spatial lorsque celui-ci est en activité, mais permettent de contrôler la vitesse angulaire de l'engin spatial 2 lorsque ce dernier est hors service.

**Revendications**

1. Dispositif (1) de contrôle de vitesse angulaire d'un engin (2) spatial hors service permettant de faciliter les opérations de retrait actif de l'engin spatial en tant que débris spatial, comprenant un stator (3) et un rotor (4) mobile selon un axe (A21) de rotation par rapport au stator, le stator (3) étant destiné à être entrainé par l'engin (2) spatial à stabiliser, le rotor (4) étant destiné à s'orienter selon le champ (5) magnétique terrestre,

   dans lequel le stator (3) comprend un corps (6) électriquement conducteur et non-ferromagnétique tandis que le rotor (4) comprend un système aimanté (7) de freinage configuré pour induire, dans le stator (3), des courants de Foucault de freinage d'un mouvement relatif du rotor (4) par rapport au stator (3) et pour créer un moment magnétique dans le champ (5) magnétique terrestre,
   **caractérisé en ce que** le rotor (4) comprend en outre au moins un aimant (11) de sustentation destiné à coopérer avec un champ magnétique généré par une source extérieure audit dispositif pour induire une sustentation magnétique du rotor (4) par rapport au stator (3) lorsque le dispositif (1) de contrôle de vitesse angulaire est en gravité terrestre,
   et **en ce que** le dispositif (1) de contrôle de vitesse angulaire est constitué d'un ou plusieurs matériaux non-ferromagnétiques au moins dans une zone (11ZI) d'influence du champ magnétique généré par ledit aimant de sustentation.

2. Dispositif (1) de contrôle de vitesse angulaire selon la revendication 1, dans lequel ledit aimant de sustentation comprend un pôle sud (115) et un pôle nord (11N) disposés selon l'axe (A21) de rotation.

3. Dispositif (1) de contrôle de vitesse angulaire selon la revendication 1 ou 2, dans lequel le rotor (4) est guidé dans au moins deux logements (10a, 10b) du stator (3) centrés selon l'axe de rotation (A21), selon un contact mécanique du type sphère contre plan.

4. Dispositif (1) de contrôle de vitesse angulaire selon la revendication 3, dans lequel lesdits deux logements (10a, 10b) comprennent chacun un palier lisse fermé, à l'opposé du rotor, par une cloison plane de fin de course disposée transversalement au palier, deux têtes sphériques (9a, 9b) intégrées dans le rotor (4) et centrées selon l'axe de rotation (A21) étant configurées pour coopérer avec lesdits deux logements.

5. Dispositif (1) de contrôle de vitesse angulaire selon l'une quelconque des revendications 1 à 4, dans lequel ledit aimant de sustentation est fixé à demeure au rotor.

6. Dispositif (1) de contrôle de vitesse angulaire selon l'une quelconque des revendications 1 à 4, dans lequel ledit aimant de sustentation est fixé de manière temporaire au rotor.

7. Dispositif de contrôle de vitesse angulaire selon l'une quelconque des revendications 1 à 6, dans lequel l'aimant de sustentation se présente sous une forme annulaire.

8. Système comprenant :

   - un dispositif (1) de contrôle de vitesse angulaire selon l'une quelconque des revendications 1 à 7 ; et
   - un dispositif (20) de test dudit dispositif (1) de contrôle de vitesse angulaire, le dispositif de test comprenant au moins une source (21) de champ magnétique destiné à coopérer avec ledit aimant de sustentation pour induire une sustentation magnétique du rotor (4) par rapport au stator (3) en gravité terrestre.

9. Système selon la revendication 8, dans lequel ladite source (21) de champ magnétique comprend un aimant permanent ou un électro-aimant.

10. Procédé de test au sol d'un dispositif (1) de contrôle de vitesse angulaire selon l'une quelconque des revendications 1 à 7, par mise en œuvre d'un dispositif (20) de test comprenant au moins une source (21) de champ magnétique destiné à coopérer avec ledit aimant de sustentation pour induire une sustentation magnétique du rotor (4) par rapport au stator (3) en gravité terrestre, **caractérisé en ce qu'**il comprend :

   - un ajustement (E500) relatif du dispositif (1) de contrôle et du dispositif de test, comprenant un réglage fin (E500b) du champ magnétique engendré par ladite source de champ magnétique de façon à ce que le champ magnétique coopère avec ledit aimant de sustentation du dispositif (1) de contrôle de vitesse angulaire pour induire ladite sustentation magnétique du rotor (4) par rapport au stator (3) ;
   - un test (E510) fonctionnel du dispositif (1) de contrôle ajusté.

11. Procédé selon la revendication 10, dans lequel ladite source de champ magnétique comprend un électro-aimant, le procédé comprenant au moins une mise en fonctionnement (E500a) de l'électro-aimant pour engendrer ledit champ magnétique.

12. Engin (2) spatial comprenant au moins un dispositif (1) de contrôle de vitesse angulaire selon l'une des revendications 1 à 7.

13. Engin (2) spatial selon la revendication précédente, comprenant en outre des moyens de contrôle d'attitude selon trois axes adaptés à stabiliser l'attitude de l'engin spatial en activité, ledit dispositif (1) de contrôle de vitesse angulaire agissant simultanément aux moyens de contrôle d'attitude de l'engin spatial en activité et exerçant une action négligeable par rapport à ces moyens de contrôle d'attitude de l'engin spatial en activité.

14. Engin (2) spatial selon la revendication 12 ou 13, dans lequel ledit dispositif (1) de contrôle de vitesse angulaire est agencé de façon à ce que l'axe de rotation du rotor forme un angle inférieur ou égal à 45° avec un axe de plus grande inertie de l'engin spatial, tel que l'engin spatial hors service tende vers un mouvement de rotation autour de cet axe de plus grande inertie.

**Patentansprüche**

1. Steuervorrichtung (1) der Winkelgeschwindigkeit eines außer Betrieb stehenden Raumfahrzeugs (2), die die Vorgänge des aktiven Entfernens des Raumfahrzeugs als Raumschutt ermöglicht, umfassend einen Stator (3) und einen Rotor (4), der sich entlang einer Rotationsachse (A21) in Bezug auf den Stator bewegt, wobei der Stator (3) dazu bestimmt ist, von dem zu stabilisierenden Raumfahrzeug (2) angetrieben zu werden, wobei der Rotor (4) dazu bestimmt ist, sich nach dem Erdmagnetfeld (5) zu orientieren,

   wobei der Stator (3) einen elektrisch leitfähigen und nicht ferromagnetischen Körper (6) umfasst, während der Rotor (4) ein magnetisches Bremssystem (7) umfasst, das so eingerichtet ist, dass es in dem Stator (3) Wirbelströme zur Bremsung einer relativen Bewegung des Rotors (4) in Bezug auf den Stator (3) induziert und ein magnetisches Moment in dem Erdmagnetfeld (5) erzeugt, **dadurch gekennzeichnet, dass** der Rotor (4) ferner mindestens einen Schwebemagneten (11) umfasst, der dazu bestimmt ist, mit einem von einer außerhalb der Vorrichtung liegenden Quelle erzeugten Magnetfeld zusammenzuwirken, um einen magnetischen Schwebezustand des Rotors (4) in Bezug auf den Stator (3) zu induzieren, wenn die Steuervorrichtung (1) der Winkelgeschwindigkeit in der Schwerkraft der Erde liegt, und dass die Steuervorrichtung (1) der Winkelgeschwindigkeit aus einem oder mehreren nichtferromagnetischen Materialien mindestens in einem Einflussbereich (11ZI) des von dem Schwebemagneten erzeugten Magnetfelds besteht.

2. Steuervorrichtung (1) der Winkelgeschwindigkeit nach Anspruch 1, wobei der Schwebemagnet einen Südpol (11S) und einen Nordpol (11N) umfasst, die entlang der Drehachse (A21) angeordnet sind.

3. Steuervorrichtung (1) der Winkelgeschwindigkeit nach Anspruch 1 oder 2, wobei der Rotor (4) in mindestens zwei Gehäusen (10a, 10b) des Stators (3) geführt wird, die nach der Drehachse (A21), nach einem mechanischen Kontakt des Typs Kugel gegen eine Fläche, zentriert sind.

4. Steuervorrichtung (1) der Winkelgeschwindigkeit nach Anspruch 3, wobei die beiden Gehäuse (10a, 10b) jeweils ein Gleitlager umfassen, das gegenüber dem Rotor durch eine quer zu dem Lager angeordnete ebene Endanschlagswand geschlossen ist, wobei zwei Kugelköpfe (9a, 9b), die in den Rotor (4) integriert und nach der Drehachse (A21) zentriert sind, so eingerichtet sind, dass sie mit den beiden Gehäusen zusammenwirken.

5. Steuervorrichtung (1) der Winkelgeschwindigkeit nach einem der Ansprüche 1 bis 4, wobei der Schwebemagnet dauerhaft an dem Rotor befestigt ist.

6. Steuervorrichtung (1) der Winkelgeschwindigkeit nach einem der Ansprüche 1 bis 4, wobei der Schwebemagnet vorübergehend an dem Rotor befestigt ist.

7. Steuervorrichtung der Winkelgeschwindigkeit nach einem der Ansprüche 1 bis 6, wobei der Schwebemagnet ringförmig ist.

8. System, umfassend:

   - eine Steuervorrichtung (1) der Winkelgeschwindigkeit nach einem der Ansprüche 1 bis 7; und
   - eine Prüfvorrichtung (20) der Steuervorrichtung (1) der Winkelgeschwindigkeit, wobei die Prüfvorrichtung mindestens eine Magnetfeldquelle (21) umfasst, die dazu bestimmt ist, mit dem Schwebemagneten zusammenzuwirken, um einen magnetischen Schwebezustand des Rotors (4) in Bezug auf den Stator (3) in der Schwerkraft der Erde zu induzieren.

9. System nach Anspruch 8, wobei die Magnetfeldquelle (21) einen Permanentmagneten oder einen Elektromagneten umfasst.

10. Verfahren zur Bodenprüfung einer Steuervorrichtung (1) der Winkelgeschwindigkeit nach einem der Ansprüche 1 bis 7, durch Einsatz einer Prüfvorrichtung (20), die mindestens eine Magnetfeldquelle (21) umfasst, die dazu bestimmt ist, mit dem Schwebemagneten zusammenzuwirken, um einen magnetischen Schwebezustand des Rotors (4) in Bezug auf den Stator (3) in der Schwerkraft der Erde zu induzieren,

    **dadurch gekennzeichnet, dass** es ferner Folgendes umfasst:

    - eine relative Anpassung (E500) der Steuervorrichtung (1) und der Prüfvorrichtung, umfassend eine Feineinstellung (E500b) des von der Magnetfeldquelle erzeugten Magnetfelds, so dass das Magnetfeld mit dem Schwebemagneten der Steuervorrichtung (1) der Winkelgeschwindigkeit zusammenwirkt, um den magnetischen Schwebezustand des Rotors (4) in Bezug auf den Stator (3) zu induzieren;
    - eine Funktionsprüfung (E510) der angepassten Steuervorrichtung (1).

11. Verfahren nach Anspruch 10, wobei die Magnetfeldquelle einen Elektromagneten umfasst, wobei das Verfahren mindestens eine Inbetriebnahme (E500a) des Elektromagneten umfasst, um das Magnetfeld zu erzeugen.

12. Raumfahrzeug (2), das mindestens eine Steuervorrichtung (1) der Winkelgeschwindigkeit nach einem der Ansprüche 1 bis 7 umfasst.

13. Raumfahrzeug (2) nach dem vorhergehenden Anspruch, das ferner Mittel zur Steuerung der Lage in drei Achsen umfasst, die dazu ausgelegt sind, die Lage des Raumfahrzeugs im Betrieb zu stabilisieren, wobei wobei die Steuervorrichtung (1) für die Winkelgeschwindigkeit gleichzeitig mit den Mitteln zur Steuerung der Lage des Raumfahrzeugs im Betrieb wirkt und im Vergleich zu diesen Mitteln zur Steuerung der Lage des Raumfahrzeugs im Betrieb eine unerhebliche Wirkung ausübt.

14. Raumfahrzeug (2) nach Anspruch 12 oder 13, wobei die Steuervorrichtung (1) der Winkelgeschwindigkeit so angeordnet ist, dass die Drehachse des Rotors einen Winkel kleiner oder gleich 45° mit einer Achse mit größerer Trägheit des Raumfahrzeugs bildet, so dass das außer Betrieb stehende Raumfahrzeug zu einer Drehbewegung um diese Achse mit größerer Trägheit tendiert.

**Claims**

1. Device (1) for controlling the angular velocity of an out-of-service spacecraft (2) making it possible to facilitate the operations of active removal of the spacecraft as space debris, comprising a stator (3) and a rotor (4) movable about an axis (A21) of rotation with respect to the stator, the stator (3) being intended to be driven by the spacecraft (2) to be stabilized, the rotor (4) being intended to orient according to the Earth's magnetic field (5),

wherein the stator (3) comprises an electrically conductive and non-ferromagnetic body (6) while the rotor (4) comprises a magnetic braking system (7) configured to induce, in the stator (3), eddy currents for braking a relative movement of the rotor (4) with respect to the stator (3) and to create a magnetic moment in the Earth's magnetic field (5),
**characterized in that** the rotor (4) further comprises at least one magnetic-suspension magnet (11) intended to cooperate with a magnetic field generated by a source external to said device in order to suspend the rotor (4) magnetically with respect to the stator (3) when the angular velocity control device (1) is in the Earth's gravity,
and **in that** the angular velocity control device (1) consists of one or more non-ferromagnetic materials at least in a zone (11ZI) of influence of the magnetic field generated by said magnetic-suspension magnet.

2. Angular velocity control device (1) according to claim 1, wherein said magnetic-suspension magnet comprises a south pole (11S) and a north pole (11N) disposed along the axis (A21) of rotation.

3. Angular velocity control device (1) according to claim 1 or 2, wherein the rotor (4) is guided in at least two housings (10a, 10b) of the stator (3) centered along the axis of rotation (A21), according to a mechanical contact of the counter-plane sphere type.

4. Angular velocity control device (1) according to claim 3, wherein said two housings (10a, 10b) each comprise a plain bearing closed, opposite the rotor, by a plane end stop partition disposed transversely to the bearing, two spherical heads (9a, 9b) integrated into the rotor (4) and centered along the axis of rotation (A21) being configured to cooperate with said two housings.

5. Angular velocity control device (1) according to any one of claims 1 to 4, wherein said magnetic-suspension magnet is permanently attached to the rotor.

6. Angular velocity control device (1) according to any one of claims 1 to 4, wherein said magnetic-suspension magnet is temporarily attached to the rotor.

7. Angular velocity control device according to any one of claims 1 to 6, wherein the magnetic-suspension magnet is in an annular shape.

8. System comprising:

- an angular velocity control device (1) according to any one of claims 1 to 7; and
- a device (20) for testing said angular velocity control device (1), the test device comprising at least one magnetic field source (21) intended to cooperate with said magnetic-suspension magnet in order to suspend the rotor (4) magnetically with respect to the stator (3) in the Earth's gravity.

9. System according to claim 8, wherein said magnetic field source (21) comprises a permanent magnet or an electromagnet.

10. Method for testing on the ground an angular velocity control device (1) according to any one of claims 1 to 7, by implementing a test device (20) comprising at least one magnetic field source (21) intended to cooperate with said magnetic-suspension magnet in order to suspend the rotor (4) magnetically with respect to the stator (3) in the Earth's gravity, **characterized in that** it comprises:

- a relative adjustment (E500) of the control device (1) and of the test device, comprising a fine adjustment (E500b) of the magnetic field generated by said magnetic field source so that said magnetic field cooperates with said magnetic-suspension magnet of the angular velocity control device (1) in order to suspend said rotor (4) magnetically with respect to the stator (3);
- a functional test (E510) of the adjusted control device (1).

11. Method according to claim 10, wherein said magnetic field source comprises an electromagnet, the method comprising at least one operation (E500a) of the electromagnet to generate said magnetic field.

12. Spacecraft (2) comprising at least one angular velocity control device (1) according to one of claims 1 to 7.

13. Spacecraft (2) according to the preceding claim, further comprising attitude control means according to three axes adapted to stabilize the attitude of the spacecraft in activity, said angular velocity control device (1) acting simultaneously with the attitude control means of the spacecraft in activity and exercising a negligible action with respect to these attitude control means of the spacecraft in activity.

14. Spacecraft (2) according to claim 12 or 13, wherein said angular velocity control device (1) is arranged so that the axis of rotation of the rotor forms an angle less than or equal to 45° with an axis of greater inertia of the spacecraft, such that the out-of-service spacecraft tends toward a rotational movement about this axis of greater inertia.

1

A21

5

3

18
7
19

18

6

4

**[Fig.1]**

1

M22a    M22c

18a

3    18c

A21    N

5

P20    S

18d    4

M22d  M22b    18b

**[Fig.2]**

[Fig.3a]

[Fig.3b]

[Fig.4]

[Fig.5]

[Fig.6]

[Fig.7]

**RÉFÉRENCES CITÉES DANS LA DESCRIPTION**

**Documents brevets cités dans la description**

- EP 2746163 A
- EP 2671804 A
- EP 3538441 A
- US 9663250 B1